# EUROPÄISCHE PATENTSCHRIFT

(11) **EP 1 044 554 B1**
(45) Veröffentlichungstag und Bekanntmachung des Hinweises auf die Patenterteilung: **27.06.2001**
(21) Anmeldenummer: 98960986.2
(22) Anmeldetag: 29.12.1998
(51) Int. Cl.: H04M 3/42, H04Q 3/00

(54) **VERFAHREN UND SYSTEM, UM BENUTZERN EINES TELEKOMMUNIKATIONSNETZES OBJEKTE ZUR VERFÜGUNG ZU STELLEN**
METHOD AND SYSTEM FOR MAKING OBJECTS AVAILABLE TO USERS OF A TELECOMMUNICATIONS NETWORK
PROCEDE ET SYSTEME POUR METTRE DES OBJETS A DISPOSITION D'UTILISATEURS D'UN RESEAU DE TELECOMMUNICATION

(43) Veröffentlichungstag der Anmeldung: 18.10.2000
(73) Patentinhaber: Swisscom Mobile AG, 3050 Bern (CH)
(72) Erfinder: RITTER, Rudolf, CH-3052 Zollikofen (CH); CABANO, Claudio, CH-3006 Bern (CH); LAUPER, Eric, CH-3012 Bern (CH)
(74) Vertreter: Saam, Christophe
(86) Internationale Anmeldenummer: CH9800562
(87) Internationale Veröffentlichungsnummer: WO0039987

(56) Entgegenhaltungen:
- WO-A-97/31491
- LOW C: "THE INTERNET TELEPHONY RED HERRING" HP LABORATORIES TECHNICAL REPORT, 15. Mai 1996, Seiten 1-15, XP002043901

## Beschreibung

Die vorliegende Erfindung betrifft ein Verfahren und ein System, um Benutzern eines Telekommunikationsnetzes Objekte, insbesondere Dokumente, Multimedia Objekte, Software Anwendungen und/oder Prozesse, zur Verfügung zu stellen. Die vorliegende Erfindung betrifft insbesondere ein Verfahren, um nomadenhaften Benutzern eines Netzes, in welchem die Benutzer sich mit einem Identifizierungsmodul, zum Beispiel mit einer persönlichen Chipkarte, insbesondere mit einer SIM-Karte identifizieren, Objekte zur Verfügung zu stellen.

Telekommunikationssysteme, um Daten und Objekte anderen Benutzern zur Verfügung zu stellen, sind schon bekannt. In diesen Systemen, auch Pull-Systeme benannt, können verschiedene Anbieter Objekte und Daten in verschiedenen Knoten eines Telekommunikationsnetzes ablegen, wo sie dann auf Initiative der Benutzer abgefragt werden können. Das Internet ist ein bekanntes Beispiel eines solchen Systems.

Die Benutzer werden meistens durch das öffentliche Telefonnetz mit einem lokalen Internet Dienstanbieter (ISP, Internet Service Provider) verbunden. Die Benutzer werden im Allgemeinen vom Telefonnetzbetreiber nicht persönlich identifiziert; nur die verwendeten Endgeräte werden unabhängig vom Benutzer für die Verrechnung der Telekommunikationsgebühren identifiziert. Die ISP verlangen meistens von den Benutzern ein Passwort für die Identifizierung; viele ISP verlangen jedoch keine absolut zuverlässliche Identifizierung. Das Internet kann dadurch auch von anonymen und unzuverlässig identifizierten Benutzern benutzt werden. Ausserdem wird die Identifizierung der Benutzer vom ISP in der Regel nicht an weitere Informationenanbieter weitergeleitet.

Da die Identifizierung der Internetbenutzer nicht zuverlässig ist, kann sie nicht verwendet werden, um die Zugriffberechtigungen dieser Benutzer auf vertrauliche Objekte, zum Beispiel private oder Firmen-Dokumente, zu prüfen. Anbieter von vertraulichen oder kostenpflichtigen Objekten und Dokumenten im Internet verlangen in der Regel von den Benutzern, dass sie sich mit einem Passwort identifizieren, bevor sie auf geschützte Speicherbereiche zugreifen können. Die Benutzer werden in diesem Fall direkt vom Anbieter identifiziert und erhalten eine erste Rechnung vom Telefonnetzanbieter für die Verbindung zum ISP, eine zweite Rechnung vom ISP für den Zugriff auf Internet und eine dritte Rechnung vom Objektanbieter für den Zugriff auf die nachgefragten Objekte. Diese Verrechnung ist eher umständlich für den Benutzer.

Es sind ausserdem Mobilfunknetze und andere Netze bekannt, in welchen sich die Benutzer, oft auch Teilnehmer benannt, mit einem Identifizierungsmodul, oft auch SIM-Karte benannt (Subscriber Identification Module), in der Form einer Chipkarte identifizieren. In diesen Netzen werden die Benutzer sehr zuverlässig und unabhängig vom benutzten Endgerät vom Netzbetreiber identifiziert. Das GSM-Mobilfunknetz ist ein Beispiel eines solchen Netzes.

Das GSM-Netz wurde in erster Linie für den Sprachverkehr zwischen mobilen Benutzern entwickelt. Schnittstellen zwischen GSM-Netzen und anderen Netzen, zum Beispiel Internet, sind jedoch auch bekannt und wurden unter anderem in der Patentanmeldung EP-A1-0841788 beschrieben. Damit können Teilnehmer in einem Mobilfunknetz auch auf Daten zugreifen, die von einem Anbieter in einem Host im Internet abgelegt worden sind und diese Daten beispielsweise auf mobilen Endgeräten, zum Beispiel Mobilfunktelefone oder Palmtops, empfangen. Ein Protokoll für den Datentransport und für Anwendungen innerhalb eines Mobilfunknetzes wurde unter anderem vom WAP-Forum (Wireless Application Protocol Forum) spezifiziert.

Mobilfunkteilnehmer, die sich auf diese Weise mit ihrem Mobilendgerät mit Internet verbinden, werden nur innerhalb vom Mobilfunknetz identifiziert. Diese zuverlässige Identifizierung mit der Chipkarte der Benutzer kann jedoch nicht von Objektanbietern im Internet verwendet werden, um die Zugriffberechtigungen dieser Benutzer auf geschützte Objekte zu prüfen. Ausserdem können diese Anbieter diese Zugriffe nicht auf einfache Weise den Benutzern verrechnen.

Es ist daher ein Ziel dieser Erfindung, ein Verfahren und ein System vorzuschlagen, um Benutzern eines Telekommunikationsnetzes Objekte zur Verfügung zu stellen, in welchem die Benutzer sich mit einem Identifizierungsmodul identifizieren, und in welchem die Identifizierung auch zum Prüfen der Zugriffberechtigungen auf verschiedene Objekte von verschiedenen Anbietern verwendet wird.

Ein anderes Ziel ist es, ein Verfahren und ein System vorzuschlagen, die auch von nomadenhaften Benutzern, die nicht mit einem festen Knoten im Telekommunikationsnetz verbunden sind, angewendet werden können. Nomadenhafte Benutzer sind in diesem Text Benutzer, die sich aus verschiedenen Knoten in einem Telekommunikationsnetz anmelden können und deren Identifizierungen nicht vom geographischen Standort abhängig sind. Als Beispiel von nomadenhaften Benutzen können zum Beispiel Mobilfunkteilnehmer in einem digitalen Mobilfunknetz, Fix- und PLC-Netzbenutzer (Power-Line Communication-Netzbenutzer) angegeben werden, die sich persönlich und unabhängig vom benutzten Endgerät mit einem Identifizierungsmodul im Netz identifizieren lassen.

Ein anderes Ziel der Erfindung ist es, ein Verfahren und ein System vorzuschlagen, in welchen auch die Objektanbieter sich mit einem Identifizierungsmodul identifizieren lassen. Auf diese Weise können sie zuverlässig identifiziert werden, so dass sie selbst die Zugriffberechtigungen auf abgelegte Daten verwalten können.

Die von den Anbietern erteilte Zugriffberechtigungen können nominal oder auf den Inhaber eines Tokens ausgestellt sein. Im ersten Fall können nur die Benutzer, deren Namen oder Identifizierung in einer vom Anbieter aufgestellten Liste enthalten sind, auf die betroffenen Objekte zugreifen. Im zweiten Fall müssen sich die Benutzer ein übertragbares Token besorgen, um auf diese Objekte zugreifen zu können. Diese Token enthalten beispielweise einen elektronischen Schlüsset für die betroffenen Dokumente und können auch verkauft oder verhandelt werden. Auf diese Weise kann auch das Urheberrecht für ein Dokument, beispielsweise für einen Text oder ein Multimedia Dokument, verkauft werden.

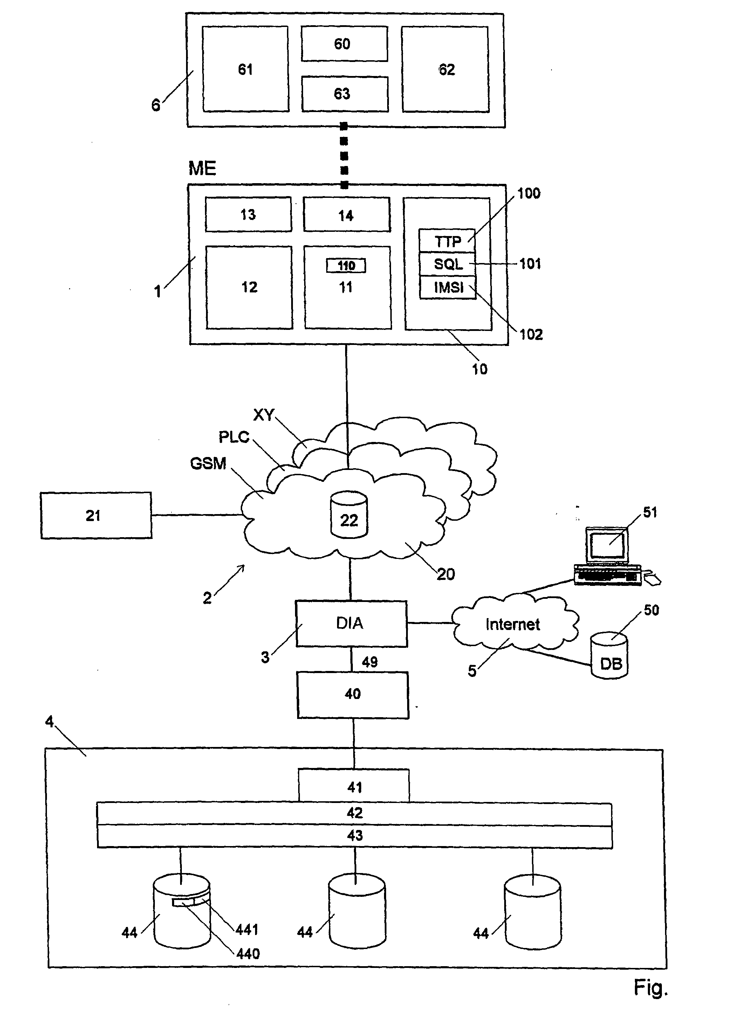

Die vorliegende Erfindung wird mit Hilfe der als Beispiel angeführten Beschreibung besser verständlich, welche durch die einzige Figur illustriert wird, die ein Blockschema zeigt, das die wichtigsten Komponenten eines Telekommunikationssystems gemäss einem Beispiel der Erfindung zeigt.

Die Figur zeigt auf schematische Weise ein Benutzerendgerät 1, das in einem Telekommunikationsnetz 2 eingesetzt werden kann. Das Endgerät 1 kann beispielsweise ein digitales Mobilfunkgerät sein, zum Beispiel ein Mobilfunktelefon oder ein Laptop/Palmtop, das beispielsweise in einem GSM-Netz 20 oder in einem UMTS-Netz verwendet werden kann. Das Endgerät 1 kann aber auch ein PLC-Endgerät (Power Line Communication) sein, das über ein Stromnetz 2 mit anderen Endgeräten verbunden werden kann. In einer Variante besteht das Endgerät 1 aus einem normalen Endgerät in einem Fixnetz, zum Beispiel aus einem Telefon, einem Fax, einem Fernseh-, Radio oder DAB-Empfänger oder aus einem PC mit Modem, das mit einem Chipkartenleser versehen ist.

Das Endgerät umfasst in diesem Beispiel ein Identifizierungsmodul 10 (wird später erläutert), Datenverarbeitungsmittel 11 (zum Beispiel ein Prozessor mit entsprechenden Speichermitteln), Eingabemittel 12, (beispielsweise eine Tastatur, ein Mikrophon, einen Eingabepen und/oder eine Maus), sowie Wiedergabemittel 13, (beispielsweise eine LCD-Anzeige und/oder einen Lautsprecher). Vorzugsweise umfasst das Endgerät 1 ausserdem eine kontaktlose Schnittstelle 14, mit welcher es mit anderen Geräten 6 im selben Raum kommunizieren kann. Die kontaktlose Schnittstelle 14 kann beispielsweise eine infrarote Schnittstelle, beispielsweise gemäss dem IrdA Protokoll (InfraRed Data Association), oder vorzugsweise eine Funkschnittstelle gemäss den Bluetooth-Spezifikationen sein. Das andere Gerät 6 kann beispielsweise dazu dienen, die Eingabe-, Wiedergabe- oder Speicher-Möglichkeiten des meistens tragbaren Endgerätes 1 zu erweitern. Das Gerät 6 kann beispielsweise ein PC sein, das mehr Speicher- und Bearbeitungsmöglichkeiten anbietet, ein Darstellungsgerät, beispielsweise ein Monitor, ein Projektor, ein Fernsehgerät oder ein Drucker, oder auch ein Empfangsgerät, beispielsweise ein PC mit Anschluss an das Internet, ein DAB-Empfänger (Digital Audio Broadcasting), usw. Die Datenübertragung zwischen dem Endgerät 1 und dem externen Gerät 6 ist vorzugsweise bidirektionel.

Die Datenverarbeitungsmittel 11 umfassen vorzugsweise Hardware-Komponenten sowie Software-Module, beispielsweise ein WAP-Modul (Wireless Application Protocol) um Daten gemäss dem WAP-Protokoll empfangen und senden zu können.

Andere Komponenten im Endgerät 1 können beispielsweise auch einen nicht dargestellten GPS (Global Positionning System) - Empfänger oder eine ähnliche Standortbestimmungsvorrichtung umfassen, mit welcher der geographische Standort des Endgerätes ermittelt werden kann.

Der Benutzer des Endgerätes 1 wird im Netz 2 mit einem Identifizierungsmodul 10 identifiziert, beispielsweise mit einer im Endgerät eingesetzten Chipkarte 10. Solche Identifizierungskarten sind unter anderem in GSM-Mobilfunktelefone schon herkömmlich und werden auch in PAY-TV-Kontrollgeräten und in verschiedenen Computernetzen verwendet. Die Identifizierungskarte 10 umfasst vorzugsweise einen nicht dargestellten Prozessor, beispielsweise einen Mikroprozessor mit eingebautem Speicher, sowie nicht dargestellte Kontaktflächen, um die Karte mit dem Endgerät zu verbinden.

Eine Identifizierungsangabe 102, die den Benutzer eindeutig im Telekommunikationnetz 10 kennzeichnet, ist in einem geschützten Bereich der Karte 10 gespeichert. Solche Angaben sind zum Beispiel in GSM-Netzen unter dem Begriff IMSI (International Mobile Subscriber Identity) bekannt. Wie später erläutert, wird erfindungsgemäss diese Identifizierung auch für die Identifizierung der Benutzer im Datenbanksystem 4 benutzt.

Als Identifizierung kann auch in einer Variante der Erfindung ein Applet, zum Beispiel ein JAVA-Applet in einer Java-fähigen Chipkarte, die beispielsweise GSM-Funktionen enthält, eingesetzt werden. Auf diese Weise kann das erfindungsgemässe Verfahren auch mit einer Java-Karte durchgeführt werden.

Die Identifizierungskarte 10 umfasst ausserdem vorzugsweise Verschlüsselungs- und Signierungsmittel 100, um Meldungen durch das Netz 2 zu signieren und zu verschlüsseln und deren Authentizität zu prüfen. Zu diesem Zweck wird vorzugsweise das TTP-Verfahren (Trusted Third Party) eingesetzt, das in der Patentanmeldung PCT/CH90/00086 im Namen der Anmelderin beschrieben ist. Dadurch können die Vertraulichkeit, die Authentizität, die Nichtabstreitbarkeit des Ursprungs, die Integrität der Daten und die Authentizität des betreffenden Senders gewährleistet werden.

Ein SQL-Client (Structured Query Language) 101 ist ausserdem vorzugsweise in der Karte 10 als Software-Anwendung integriert. In einer Karte integrierte SQL-Clients werden schon von der Firma Centura angeboten. Dadurch kann ein Gespräch gemäss dem SQL-Protokoll zwischen dem SQL-Client 101 in der Karte und einem externen SQL-Datenbankserver im Telekommunikationsnetz geführt werden, wie später erläutert. Andere Datenbankabfragesprachen können aber auch anstatt oder zusätzlich zum SQL im Rahmen der Erfindung angewendet werden.

Die Karte 10 ist vorzugsweise JAVA-fähig und der SQL-Client ist vorzugsweise ein SQL JDBC (SQL Java Database Connectivity).

Das Endgerät 1 mit dem Identifizierungsmodul 10 kann sich in einem nomadenhaften Netz 2, zum Beispiel in einem Mobilfunknetz 20, anmelden, um mit anderen Endgeräten in diesem Netz zu kommunizieren. Das Netz 2 umfasst vorzugsweise ein Heimdateiregister HLR (Home Location Register) 22, in welchem benutzerspezifische Angaben, unter anderem auch die Rechnungsadresse und der momentane Standort des Endgeräts im Netz gespeichert werden. Wenn der Benutzer sein Endgerät einschaltet oder mit dem Netz verbindet, wird er vom HLR 22 durch seine Benutzeridentifizierungsangabe 102 identifiziert. Verbindungen, die der Benutzer durch das Netz 2 erstellt, oder die Inanspruchnahme anderer Mehrwertdienste im Netz (VAS, Value Added Services) werden dann durch ein Verrechnungszentrum 21 (Billing Server) entweder einem nicht dargestellten Geldkonto in der Karte 10 belastet (Prepaid) oder später dem Benutzer mit einer Monatsrechnung verrechnet (Postpaid).

Vorzugsweise kann sich der Benutzer mit seinem Endgerät auch in anderen Netzen, die von anderen Netzbetreibern verwaltet werden, anmelden. Bekannte Roamingsverfahren werden zu diesem Zweck eingesetzt. Vorzugsweise kann sich der Benutzer mit seiner Identifizierungskarte 10 auch in Netzen eines anderen Typs anmelden, zum Beispiel mit der selben Karte und geeignete Endgeräten entweder in einem GSM-Netz mit 900, 1800 oder 1900 MHz oder auch in einem PLC-Netz (power-Line Communication). Rechnungen werden dem Benutzer aber immer von dem Verrechnungszentrum seines Heimnetzbetreibers zugestellt.

Durch eine passende Schnittstelle DIA (Direct Internet Access) 3 wird das Netz 2 mit dem Internet 5 verbunden. Diese Schnittstelle 3 erlaubt es, Meldungen in beiden Richtungen zwischen dem nomadenhaften Netz 2 und dem Internet zu übertragen. Auf diese Weise kann ein Benutzer, der im Netz 2 angemeldet ist, auch E-Mails mit seinem Endgerät 10 vorbereiten, senden und empfangen, oder Daten aus dem Web-Server 51 oder aus Datenbanken 50 im Internet fernladen. Zu diesem Zweck wird vorzugsweise das WAP-Protokoll (Wireless Application Protocoll) eingesetzt.

Im Internet 5 ist der nomadenhafte Benutzer anonym, oder höchstens mit seiner leicht fälschbaren E-Mail-Adresse identifiziert. Der Zugriff auf gesicherte oder kostspielige Anwendungen oder Objekte im Internet ist daher nur mit Hilfe von zusätzlichen End-to-End Verschlüsselungsverfahren möglich. Die Verrechnung dieser Anwendungen wird in diesem Fall meistens vom Dienstanbieter 50, 51 durchgeführt, indem beispielsweise der nachfragende Benutzer ihm seine Kreditkartennummer mitteilt. Der Benutzer erhält für jeden benutzten Dienst eine separate Rechnung, was ziemlich umständlich ist, vor allem wenn viele kleine Beträge von verschiedenen Anbietern verrechnet werden. Ausserdem kennen sich in den meisten Fällen die Benutzer und die Objekt-Anbieter nicht, so dass die Letztern kaum in der Lage sind, die Solvenz der Benutzer zu prüfen.

Gemäss der Erfindung wird das Netz 2 auch mit einem Datenbanksystem 4 verbunden, das beispielsweise vom Betreiber des Netzes 2 und/oder von einer oder mehreren mit ihm verbundenen Organisationen verwaltet wird. Die Verbindung zwischen dem Netz 2 und das Datenbanksystem 4 erfolgt vorzugsweise durch das erwähnte DIA 3 und durch ein Link 49, beispielsweise ein TCP/IP, ATM oder XDSL Link, und einer optionalen Firewall-Vorrichtung 40. Das TCP/IP Link und die Firewall-Vorrichtung werden vorzugsweise vom Betreiber des Netzes 2 und/oder des Systems 4 verwaltet; die Verbindung wird daher nicht durch das öffentliche Internet 5 hergestellt.

Das Datenbanksystem besteht aus einer oder vorzugsweise mehreren verteilten Datenbanken 44 (Hosts), die sich an verschiedenen geographischen Standorten befinden können. Ein konventioneller Datenbankadministrator 42 verwaltet die gesamte Datenbank, unter anderem das Ablegen der Objekte (Dokument Hosting) und gegebenenfalls auch die Replikationsrechte. Der Datenbankadministrator kann beispielsweise einen konventionellen SQL-Server 420, vorzugsweise ein Java DBC-Server, umfassen. Ein Benutzer-Administrator 43, der vorzugsweise aus einem Software-Modul besteht, verwaltet die Rechte der verschiedenen Benutzer.

Um anderen Benutzer des Telekommunikationsnetzes Objekte zur Verfügung zu stellen, muss ein Benutzer vorerst ein Gebiet 440 im Datenbanksystem 4 reservieren. Zu diesem Zweck muss er sich im Netz 2 anmelden und eine Meldung, zum Beispiel über das WAP-Protokoll und/ oder ein SQL-Protokoll, an das Datenbanksystem senden. Erfindungsgemäss wird er vom Benutzer-Administrator 43 durch die übertragenen Identifizierungsangaben 102 aus seinem Identifizierungsmodul 10 identifiziert. Im Fall eines GSM-Netzes 20 wird beispielsweise die IMSI-Identifizierung oder eine in einem Applet enthaltene Identifizierung die in der SIM-Karte 10 des Benutzers gespeichert ist, durch das Netz 2 und den gesicherten Kanal 3, 49, 40 an das Datenbanksystem übertragen. Der Benutzer kann dann Daten und Objekte in diesem reservierten Gebiet 440 ablegen.

Reservierte Speicherbereiche werden dem Benutzer vorzugsweise vom Datenbanksystem vermietet. Der verrechnete Betrag ist beispielsweise vom reservierten oder vom tatsächlich verwendeten Speicherbereich und von der Dauer der Benutzung abhängig. Andere Parameter, zum Beispiel eine bestimmte verlangte Dienstqualität, können auch eine Wirkung auf den verrechneten Betrag ausüben. Vorzugsweise werden periodisch die Einzelheiten der verrechneten Beträge vom Benutzer-Administrator 43 ermittelt, in eine Meldung verpackt und durch das Link 49 und das Heimnetz 2 des Benutzers dem Verrechnungszentrum 21 zugeteilt. Zu diesem Zweck können beispielsweise Prozesse angewendet werden, die schon bei der Übermittlung von CDR (Call Details Records) in einem Roamingsprozess zwischen zwei Mobilfunknetzen benutzt werden. Applets, zum Beispiel JAVA-Applets, können auch eingesetzt werden, um eine Verrechnung in verschiedenen Netzen 2 zu erlauben. Der Betrag für die Benutzung der Datenbank wird dann einfach mit der normalen Rechnung für die Benutzung des Netzes dem anbietenden Benutzer verrechnet, oder separat verrechnet, oder einem Konto auf seiner Karte belastet.

Der anbietende Benutzer kann verschiedene Zugriffberechtigungen 441 den abgelegten Objekten zuweisen. Beispielsweise können bestimmte Objekte privat sein; in diesem Fall kann nur er auf diese Objekte zugreifen. In diesem privaten Bereich kann er beispielsweise Objekte und Dokumente ablegen, für die er keinen Platz auf seiner Identifizierungskarte 10 findet. Er kann auch beispielsweise diesen Bereich für das Backup bestimmter Bereiche seiner Karte verwenden, beispielsweise um die in seiner Karte gespeicherten Telefonnummern und benutzerspezifischen Parameter im Datenbanksystem 4 zu kopieren. Objekte kann er in diesem privaten Bereich wie in seiner Karte 10 oder in seinem Endgerät 1 speichern.

Andere Objekte können beispielsweise nur für bestimmte andere Benutzer (Closed User Group) zugänglich sein. Diese Objekte können beispielsweise firmeninterne Dokumente und Anwendungen umfassen. Die berechtigten Benutzer können entweder namentlich benannt werden - in diesem Fall können nur die vom Anbieter aufgelisteten Benutzer auf diese Objekte zugreifen - oder die Inhaber bestimmter übertragbarer Token sein - in diesem letzten Fall können nur die Benutzer, die vorher das passende Token erworben haben, einmal auf diese Objekte zugreifen. Die Token umfassen beispielsweise einen elektronischen Schlüssel, der benötigt wird, um die Objekte lesen zu können. Nach einem erfolgreichen Zugriff auf die relevanten Objekte wird dann das betreffende Token gelöscht. Auf diese Weise können beispielsweise Objekte, beispielsweise Textdokumente, Computerprogramme oder Multimediaobjekte, verkauft werden.

Andere Objekte können natürlich auch öffentlich und allgemein zugänglich sein; in diesem Fall kann jeder Benutzer ohne spezielle Berechtigung auf diese Objekte zugreifen.

Ein Benutzer, der auf im Datenbanksystem 4 abgelegte Objekte zugreifen will, muss sich vorerst mit diesem System verbinden. Zu diesem Zweck benutzt er ein Endgerät 1 mit einem Identifizierungsmodul 10, vorzugsweise ein WAP-fähiges Endgerät und/oder Modul. Er wird im Netz 2 und im Datenbanksystem 4 durch die in seinem Identifizierungsmodul gespeicherte Identifizierungsangabe identifiziert. Vorzugsweise wird seine Identität ausserdem von einem TTP-Server 41 geprüft, der seine vom Verschlüsselungssystem 100 hergestellte elektronische Signatur überprüft. Diese elektronische Signatur kann entweder jedesmal oder nur für den Zugriff auf bestimmte Objekte verlangt werden, beispielsweise nur wenn der Objektanbieter es verlangt. Ein Passwort kann auch zum Beispiel für den Zugriff auf bestimmte Objekte oder Adressenbereiche der Datenbank vom Benutzeradministrator, von einem Anbieter oder von einem geeigneten Programm in seinem Identifizierungsmodul verlangt werden.

Der nachfragende Benutzer kann dann eine Abfrage an das Datenbanksystem 4 senden. Die Abfrage kann im einfachsten Fall nur die Adresse im Datenbanksystem eines gesuchten Dokuments umfassen, oder sie kann auch eine komplexere Abfrage sein, zum Beispiel eine vom SQL-Client 101 hergestellte SQL-Abfrage, die vom SQL-Server 420 verstanden und interpretiert wird. Der SQL-Server ermittelt dann die Antwort auf die Abfrage, die beispielsweise aus einer Liste mit einem oder mehreren Objekten 440 im Datenbanksystem bestehen kann, und überprüft, ob der bereits identifizierte Benutzer auf diese Objekte zugreifen darf. Zu diesem Zweck überprüft er die vom Anbieter zugewiesene Berechtigung auf diese Objekte.

Wenn seine Zugriffberechtigungen es ihm erlauben, sendet das Datenbanksystem eine Antwort an den nachfragenden Benutzer, wobei die Antwort beispielsweise schon eine Kopie des nachgefragten Objektes enthält. Das verlangte Objekt kann dann auf dem Endgerät 1 des Benutzers gesehen, gespeichert oder gehört werden, oder über eine infrarote oder Bluetooth-Schnittstelle an ein anderes Gerät 6 übertragen werden. Falls der Benutzer keinen Zugriff auf diese Objekte hat, erhält er vorzugsweise eine Meldung, oder er wird gebeten, eine andere Identifizierung, beispielsweise in Form eines Passwortes, einzugeben. Vorzugsweise wird die Anzahl von Versuchen auf n, beispielsweise auf 3, eingeschränkt; nach n erfolglosen Versuchen wird dann der Zugriff gesperrt.

Die Anbieter können vorzugsweise ihren Objekten auch ein Verfalldatum zuweisen. In diesem Fall erlaubt das Datenbanksystem einen Zugriff auf diese Objekte nur bis zum angegebenen Datum, was beispielsweise nützlich sein kann, um Tarife oder andere Zeitabhängige Informationen zu verteilen. In einer Variante kann auch ein Zeitfenster, mit einem Anfang und einem Ende des Gültigkeitsdatums, angegeben werden.

Wie schon erwähnt können die Anbieter beispielsweise Dokumente oder Objekte in irgendeinem Speicherformat ablegen, beispielsweise Textdokumente, feste oder bewegte Bilder, Tonsequenzen, usw. Sie können aber auch Anwendungen oder Computerprogramme ablegen, die von anderen Benutzern ferngeladen und durchgeführt werden können, wobei die Anbieter entweder eine einmalige Benutzung oder eine uneingeschränkte Anzahl Benutzungen erlauben können. Anbieter können aber vorzugsweise auch Objekte und Prozessanwendungen ablegen, die innerhalb des Datenbanksystems durchgeführt werden. Beispielsweise können Suchmachinen abgelegt werden, die es einem Benutzer erlauben, andere Objekte im Datenbanksystem 4 zu suchen oder andere Dienste durchzuführen. Im Datenbanksystem können auch Anwendungen, beispielsweise persönliche Agents, abgelegt werden, die von nachfragenden Benutzern parametrisiert werden können, um bestimmte Funktionen durchzuführen.

Vorzugsweise überprüft der Benutzeradministrator 43, ob das Endgerät des nachfragenden Benutzers es ihm technisch gestattet, auf die nachgefragten Objekte zuzugreifen. Es wäre zum Beispiel nutzlos, einem Benutzer ein Dokument, das nur Bilder enthält, zu schicken, wenn das Endgerät dieses Benutzers die Anzeige von Bildern nicht erlaubt. Zu diesem Zweck wird vorzugsweise das für andere Anwendungen in GSM-Netzen bekannte JINI-Protokoll angewendet, um die technische Kompatibilität zwischen dem Endgerät des Benutzers und dem verlangten Objekt zu prüfen.

Die Verzeichnisstruktur in den Datenbanken 44 ist nicht wesentlich für die Erfindung, muss aber eine schnelle Suche nach abgelegten Objekten erlauben. Jedes abgelegte Objekt hat vorzugsweise eine eigene Adresse, wobei bestimmte Teile der Adresse vom Datenbankadministrator zugeteilt werden während andere Teile von den anbietenden Benutzern definiert werden. Suchmaschinen, die vom Datenbankadministrator 42 und/oder von Benutzern zur Verfügung gestellt werden, helfen den Benutzern, Objekte zu finden, indem sie andere Objekte indexieren oder katalogisieren. Benutzer können vorzugsweise auch die Adresse wichtiger Dokumente oder andere Standardabfragen als Bookmarks in ihrem Identifizierungsmodul speichern.

Ein Benutzerprofil wird vorzugsweise im Datenbanksystem gespeichert und vom Benutzer-Administrator verwaltet. Im Benutzerprofil werden benutzerspezifische Angaben gespeichert, zum Beispiel die Identifizierung, die bevorzugte Sprache, das bevorzugte Endgerät usw., oder auch bevorzugte Bookmarks. Vorzugsweise enthält das Benutzerprofil auch eine verlangte Dienstqualität (QoS, Quality of Services). Auf diese Weise können verschiedene Benutzer einen qualitativ unterschiedlichen Zugriff auf die Objekte haben, der möglicherweise anders verrechnet werden kann. Die Dienstqualität kann beispielsweise die Bandbreite, die Reaktionszeit, die Verfügbarkeit, den bevorzugten Übertragungskanal (zum Beispiel SMS (Short Message System), USSD (Unstructured Supplementary Service Data) oder Nutzkanal (Sprach und/oder Datenkanal) im Fall eines GSM-Mobilfunknetzes 20) usw., der Objekte angeben.

Ebenfalls können Benutzer, die Objekte im Datenbanksystem 4 ablegen und zur Verfügung stellen, diesen Objekten auch verschiedene Dienstqualitäten zuweisen. Anbieter können beispielsweise angeben, dass jeder Benutzer mit der maximalen Bandbreite auf bestimmte Objekte zugreifen kann. Anbieter können beispielsweise auch verlangen, dass ihre Objekte in besseren Servern, zum Beispiel in schnelleren oder in besser gesicherten Servern, abgelegt werden, wenn das Datenbanksystem in mehrere Server verteilt ist.

Eine Gebühr kann für den Zugriff auf abgefragte Objekte im Datenbanksystem 4 erhoben werden. Wir haben schon erwähnt, dass auf bestimmte Objekte nur zugegriffen werden kann, wenn der nachfragende Benutzer vorerst ein Token erworben hat, wobei Token auch verkauft und vermarktet werden können. Eine Gebühr kann aber auch vom Verwalter des Datenbanksystems 4 eingefordert und mit dem oben erwähnten Mechanismus durch das Verrechnungszentrum 21 dem Benutzer direkt verrechnet werden. Die verlangte Gebühr kann von verschiedenen Parametern abhängig sein, beispielsweise von der Grösse des Objekts (in Kilobytes), vom Typ des Objekts, von der verlangten Dienstqualität, von der Komplexität der Abfrage, usw. Ausserdem können der Verwalter des Datenbanksystems und der Betreiber des Netzes 2 (wenn es sich um zwei verschiedene Organisationen handelt) auch eine Gebühr für den Transport des Objekts bis zum Endgerät des Benutzers verlangen. Der vom Verrechnungszentrum 21 verlangte Betrag kann entweder von einem vorbezahlten Geldbetrag im Identifizierungsmodul des Benutzers abgebucht werden oder dem Benutzer mit der Rechnung für die Benutzung des Telekommunikationsnetzes verrechnet werden.

Der Anbieter kann mit dem gleichen Mechanismus auch einen Betrag für den Zugriff auf die von ihm zur Verfügung gestellten Objekte verlangen. Der verlangte Betrag wird frühestens beim Ablegen bestimmter Objekte oder Klassen von Objekten zugewiesen. Wenn ein Benutzer später auf diese Objekte zugreift, wird dieser Betrag vom Datenbankadministrator ermittelt, dem Verrechnungszentrum 21 mitgeteilt, dem nachfragenden Benutzer mit einer Gebühr vom Datenbanksystemadministrator verrechnet und dem Anbieter gutgeschrieben.

Benutzer können vorzugsweise auch aus dem Internet 5 auf das Datenbanksystem 4 zugreifen - entweder um Speicherbereiche zu reservieren, um Objekte in diesen Speicherbereichen abzulegen oder um auf abgelegte Objekte zuzugreifen. In diesem Fall wird vorzugsweise ein Punkt-zu-Punkt Verschlüsselungs- und Signierungsverfahren zwischen den Benutzern 51 aus dem Internet und dem Datenbanksystem 4 eingesetzt, damit Benutzer aus dem Internet auch zuverlässig identifiziert werden können. Das TTP-Verfahren kann beispielsweise zu diesem Zweck angewendet werden. Die Benutzer aus dem Internet können jedoch nicht auf kostspielige Objekte im Datenbanksystem 4 zugreifen, oder nur mit einem anderen Verrechnungsmechanismus, zum Beispiel mit einer Kreditkarte.

## Patentansprüche

1. Verfahren, mit welchem ein erster nomadenhafter Benutzer eines Telekommunikationsnetzes (2), in welchem Benutzer mit einem persönlichen Identifizierungsmodul (10) vom Telekommunikationsnetzbetreiber identifiziert werden, anderen Benutzern des Telekommunikationsnetzes Objekte zur Verfügung stellen kann, durch folgende Schritte gekennzeichnet:
Reservierung durch den ersten Benutzer eines Speicherbereiches (440) in einem aus dem benannten Telekommunikationsnetz zugänglichen Datenbanksystem (4), in welchem mindestens eine Vielzahl von Benutzern Objekte ablegen können,
Ablegen durch den ersten Benutzer von Objekten im benannten Speicherbereich (440),
Zuweisung durch den ersten Benutzer von Zugriffberechtigungen (441) für die benannten Objekte,
Sendung durch einen zweiten Benutzer einer Abfrage an das benannte Datenbanksystem (4),
Prüfung der Zugriffberechtigungen des zweiten Benutzers durch das Datenbanksystem (4), wobei die Identität (102) des zweiten Benutzers, die in seinem benannten persönlichen Identifizierungsmodul (10) gespeichert ist, für dessen Identifizierung im Datenbanksystem (4) angewendet wird,
Wenn seine Zugriffsberechtigungen es ihm erlauben, Sendung einer Antwort aus dem Datenbanksystem (4) an den zweiten Benutzer.

2. Verfahren gemäss Anspruch 1, dadurch gekennzeichnet, dass das benannte Datenbanksystem (4) in verschiedene aus dem benannten Telekommunikationsnetz (2) zugängliche Hosts (44) verteilt ist.

3. Verfahren gemäss einem der Ansprüche 1 oder 2, in welchem das benannte Telekommunikationsnetz (2) ein digitales Mobilfunknetz (20) ist.

4. Verfahren gemäss dem vorhergehenden Anspruch, in welchem das benannte Telekommunikationsnetz (2) ein GSM-Netz (20) ist.

5. Verfahren gemäss dem Anspruch 3, in welchem das benannte Telekommunikationsnetz (2) ein UMTS-Netz ist.

6. Verfahren gemäss einem der Ansprüche 1 oder 2, in welchem das benannte Telekommunikationsnetz (2) ein digitales Power Line Kommunikationsnetz ist.

7. Verfahren gemäss einem der Ansprüche 1 oder 2, in welchem das benannte Telekommunikationsnetz (2) ein digitales Telefonnetz ist, in welchem sich die Benutzer unabhängig vom benutzten Endgerät (1) mit einer Chipkarte (10) identifizieren.

8. Verfahren gemäss einem der vorhergehenden Ansprüche, in welchem das benannte Datenbanksystem (4) durch ein TCP/IP Link mit dem benannten Telekommunikationsnetz (2) verbunden ist.

9. Verfahren gemäss dem vorhergehenden Anspruch, in welchem die Abfragen von Benutzern und die Antworten aus dem Datenbanksystem (4) in einer DIA-Schnittstelle (3) zwischen dem Telekommunikationnetz (2) und dem TCP/IP Link konvertiert werden.

10. Verfahren gemäss einem der vorhergehenden Ansprüche, in welchem die benannten ersten Benutzer keine Zugriffberechtigung für den Zugriff auf bestimmte öffentliche Objekte verlangen.

11. Verfahren gemäss einem der vorhergehenden Ansprüche, in welchem die Benutzer eine Zugriffberechtigung für bestimmte Objekte nur an eine eingeschränkte Anzahl von vordefinierten Benutzern (CUG, Closed User Group) zuweisen.

12. Verfahren gemäss einem der vorhergehenden Ansprüche, in welchem die Benutzer eine Zugriffberechtigung für bestimmte Objekte nur an sich selbst zuweisen.

13. Verfahren gemäss einem der vorhergehenden Ansprüche, in welchem die Benutzer eine Zugriffberechtigung für bestimmte Objekte nur an Inhaber eines bestimmten Tokens zuweisen.

14. Verfahren gemäss dem vorhergehenden Anspruch, dadurch gekennzeichnet, dass das benannte Token einen elektronischen Schlüssel umfasst.

15. Verfahren gemäss einem der Ansprüche 13 oder 14, dadurch gekennzeichnet, dass das benannte Token nach Zugriff auf die betreffenden Objekte gelöscht wird.

16. Verfahren gemäss dem vorhergehenden Anspruch, dadurch gekennzeichnet, dass das benannte Token erst dann gelöscht wird, wenn das Datenbanksystem (4) eine Bestätigung vom nachfragenden Benutzer erhält, dass dieser die betreffende Objekte vollständig erhalten hat.

17. Verfahren gemäss einem der vorhergehenden Ansprüche, dadurch gekennzeichnet, dass sich die Benutzer zusätzlich mit einem Passwort vor dem Datenbanksystem (4) identifizieren.

18. Verfahren gemäss dem vorhergehenden Anspruch, dadurch gekennzeichnet, dass das Passwort vom Benutzeradministrator verlangt wird.

19. Verfahren gemäss dem Anspruch 17, dadurch gekennzeichnet, dass das Passwort von einer Anwendung in dem Identifizierungsmodul (10) des Benutzers verlangt wird.

20. Verfahren gemäss einem der vorhergehenden Ansprüche, dadurch gekennzeichnet, dass sich die Benutzer zusätzlich mit einem in ihrem Identifizierungsmodul (10) abgelegten elektronischen Schlüssel vor dem Datenbanksystem (4) identifizieren.

21. Verfahren gemäss einem der vorhergehenden Ansprüche, dadurch gekennzeichnet, dass die benannte Identifizierung (102) eine IMSI-Identifizierung ist.

22. Verfahren gemäss einem der vorhergehenden Ansprüche, dadurch gekennzeichnet, dass die benannte Identifizierung (102) in einem Applet im Identifizierungsmodul (10) enthalten ist.

23. Verfahren gemäss dem vorhergehenden Anspruch, dadurch gekennzeichnet, dass der benannte elektronische Schlüssel von einem Trusted Third Party (TTP) vergeben wird.

24. Verfahren gemäss einem der vorhergehenden Ansprüche, dadurch gekennzeichnet, dass mindestens gewisse Meldungen zwischen dem benannten Benutzer und dem Datenbanksystem (4) elektronisch signiert werden.

25. Verfahren gemäss dem vorhergehenden Anspruch, dadurch gekennzeichnet, dass die Vollständigkeit von mindestens gewissen übermittelten Abfragen und/oder Objekten mit dem benannten elektronischen Schlüssel geprüft wird.

26. Verfahren gemäss einem der vorhergehenden Ansprüche, dadurch gekennzeichnet, dass ein Benutzerprofil von mindestens gewissen Benutzern in dem benannten Datenbanksystem (4) abgelegt wird.

27. Verfahren gemäss dem vorhergehenden Anspruch, dadurch gekennzeichnet, dass die benannten Benutzerprofile die Vorzugsparameter der Benutzer für die Benutzung des Datenbanksystems (4) enthalten.

28. Verfahren gemäss einem der Ansprüche 22 oder 23, dadurch gekennzeichnet, dass die benannten Benutzerprofile die bevorzugten Abfragen der Benutzer als Bookmark angeben.

29. Verfahren gemäss einem der vorhergehenden Ansprüche, dadurch gekennzeichnet, dass die anbietenden Benutzer sich mit ihrem Identifizierungsmodul (10) identifizieren, um einen Speicherbereich (440) zu reservieren.

30. Verfahren gemäss dem vorhergehenden Anspruch, dadurch gekennzeichnet, dass die benannten reservierten Speicherbereiche (440) den anbietenden Benutzern vermietet werden können.

31. Verfahren gemäss einem der vorhergehenden Ansprüche, dadurch gekennzeichnet, das der verrechnete Preis für die vermieteten Speicherbereiche (440) von der abgelegten Datenmenge und von der Ablagedauer abhängig ist.

32. Verfahren gemäss einem der vorhergehenden Ansprüche, dadurch gekennzeichnet, dass Benutzer über das Internet Speicherbereiche reservieren und Objekte in diesen Speicherbereichen ablegen.

33. Verfahren gemäss einem der vorhergehenden Ansprüche, dadurch gekennzeichnet, dass das WAP-Protokoll für den Datentransport zwischen den Endgeräten (1) und dem Datenbanksystem (4) und für die Menustruktur angewendet wird.

34. Verfahren gemäss einem der vorhergehenden Ansprüche, dadurch gekennzeichnet, dass das benannte Datenbanksystem (4) einen SQL-Server umfasst, und dass mindestens gewisse benannte Identifizierungsmodule (10) einen SQL-Client umfassen.

35. Verfahren gemäss einem der vorhergehenden Ansprüche, dadurch gekennzeichnet, dass das benannte Datenbanksystem (4) eine ODBC-Datenbank (Open Database Connectivity) umfasst.

36. Verfahren gemäss einem der vorhergehenden Ansprüche, dadurch gekennzeichnet, dass das benannte Datenbanksystem (4) eine JDBC-Datenbank umfasst.

37. Verfahren gemäss einem der vorhergehenden Ansprüche, dadurch gekennzeichnet, dass mindestens gewisse benannte Objekte Dokumente sind.

38. Verfahren gemäss einem der vorhergehenden Ansprüche, dadurch gekennzeichnet, dass mindestens gewisse benannte Objekte Multimedia-Objekte sind.

39. Verfahren gemäss einem der vorhergehenden Ansprüche, dadurch gekennzeichnet, dass mindestens gewisse benannte Objekte Anwendungen sind, die von den zweiten Benutzern durchgeführt werden können.

40. Verfahren gemäss einem der vorhergehenden Ansprüche, dadurch gekennzeichnet, dass bei der Auswertung von mindestens gewissen Abfragen ein Betrag verrechnet wird, dass eine Meldung mit mindestens einer Angabe über diesen Betrag vorbereitet und an ein Verrechnungszentrum (21) im benannten Telekommunikationsnetz (2) geleitet wird, wobei das Verrechnungszentrum (21) auch den Verkehr im benannten Telekommunikationsnetz (2) den Benutzern verrechnet, und dass das benannte Verrechnungszentrum (21) diesen Betrag dem Benutzer belastet.

41. Verfahren gemäss dem vorhergehenden Anspruch, dadurch gekennzeichnet, dass mindestens gewisse benannte Beträge automatisch von einem vorbezahlten Geldbetrag im Identifizierungsmodul des Benutzers abgebucht werden.

42. Verfahren gemäss einem der Ansprüche 40 oder 41, dadurch gekennzeichnet, dass mindestens gewisse benannte Beträge mit der Rechnung für die Benutzung des Telekommunikationsnetzes den zweiten Benutzern verrechnet werden.

43. Verfahren gemäss einem der vorhergehenden Ansprüche, dadurch gekennzeichnet, dass die benannten ersten Benutzer ein Verfalldatum für die abgelegten Objekte zuweisen können, nach welchem diese Objekte nicht mehr konsultiert werden können.

44. Verfahren gemäss einem der vorhergehenden Ansprüche, dadurch gekennzeichnet, dass die benannten ersten Benutzer ein Zeitfenster für die abgelegten Objekte zuweisen können, während welchem diese Objekte konsultiert werden können.

45. Verfahren gemäss einem der vorhergehenden Ansprüche, dadurch gekennzeichnet, dass mindestens gewisse benannte erste Benutzer den abgelegten Objekten eine Dienstqualität (QoS) zuweisen.

46. Verfahren gemäss einem der vorhergehenden Ansprüche, dadurch gekennzeichnet, dass mindestens gewisse benannte zweite Benutzer eine Dienstqualität (QoS) im Benutzerprofil verlangen, mit welchem angegeben wird, mit welcher Qualität diese Benutzer Objekte empfangen können.

47. Verfahren gemäss einem der Ansprüche 45 oder 46, dadurch gekennzeichnet, dass die benannte Dienstqualität eine minimale Bandbreite für die Übertragung der Objekte umfasst.

48. Verfahren gemäss einem der Ansprüche 45 oder 46, dadurch gekennzeichnet, dass die benannte Dienstqualität eine maximale Objektübertragungszeit umfasst.

49. Verfahren gemäss einem der Ansprüche 45 oder 46, dadurch gekennzeichnet, dass die benannte Dienstqualität einen bevorzugten Übertragungskanal umfasst.

50. Verfahren gemäss einem der vorhergehenden Ansprüche, dadurch gekennzeichnet, dass die benannten Objekte in einer mindestens teilweise von einem Datenbankadministrator (43) definierten Verzeichnisstruktur abgelegt werden.

51. Verfahren gemäss dem vorhergehenden Anspruch, dadurch gekennzeichnet, dass mindestens gewisse Objekte Suchmaschinen sind, die andere Objekte indexieren und/oder katalogisieren, um sie suchen zu können.

52. Verfahren gemäss einem der vorhergehenden Ansprüche, dadurch gekennzeichnet, dass das Benutzerprofil Angaben über das von dem zweiten Benutzer verwendete Endgerät (10) umfasst.

53. Verfahren gemäss dem vorhergehenden Anspruch, dadurch gekennzeichnet, dass das JINI-Protokoll verwendet wird, um das vom Benutzer verwendete Endgerät (1) zu bestimmen.

54. Verfahren gemäss einem der vorhergehenden Ansprüche, dadurch gekennzeichnet, dass mindestens gewisse abgefragte Objekte über eine Bluetooth Schnittstelle (14, 63) an ein anderes Gerät (6) übertragen werden.

## Claims

1. Method with which a first nomad user of a telecommunication network (2), in which users are identified with a personal identification module (10) by the provider of the telecommunications network, can provide objects to other users of the telecommunication network, characterized by the following steps:
reserving by the first user of a memory area (440) in a database system (4) accessible through said telecommunication network, in which at least a plurality of users can store objects,
filing by the first user of objects in said memory area (440),
allocation by the first user of access authorizations (441) for said objects,
sending by a second user of a query to said database system (4),
verification of the access authorizations of the second user by the database system (4), by using the second user's identity (102) stored in his said personal identification module (10) for his identification in the database system (4),
if his access authorizations allow it, sending of a reply from the database system (4) to the second user.

2. Method according to claim 1, characterized in that said database system (4) is distributed in various hosts (44) accessible from said telecommunication network (2).

3. Method according to one of the claims 1 or 2, wherein said telecommunication network (2) is a digital mobile radio network (20).

4. Method according to the preceding claim, wherein said telecommunication network (2) is a GSM network (20).

5. Method according to claim 3, wherein said telecommunication network (2) is a UMTS network.

6. Method according to one of the claims 1 or 2, wherein said telecommunication network (2) is a digital Power Line Communication network.

7. Method according to one of the claims 1 or 2, wherein said telecommunication network (2) is a digital telephone network in which the users are identified with a chip card (10) regardless of the used terminal (1).

8. Method according to one of the preceding claims, wherein said database system (4) is connected to said telecommunication network (2) via a TCP/IP link.

9. Method according to the preceding claim, wherein the queries from users and the replies from the database system (4) are converted in a DIA interface (3) between the telecommunication network (2) and the TCP/IP link.

10. Method according to one of the preceding claims, wherein said first users do not request access authorization for accessing certain public objects.

11. Method according to one of the preceding claims, wherein the users allot an access authorization to certain objects only for a limited number of predefined users (CUG, Closed User Group).

12. Method according to one of the preceding claims, wherein the users allot an access authorization for certain objects only to themselves.

13. Method according to one of the preceding claims, wherein the users allot an access authorization for certain objects only to holders of a certain token.

14. Method according to the preceding claim, characterized in that said token contains an electronic key.

15. Method according to one of the claims 13 or 14, characterized in that said token is erased after access to the objects in question.

16. Method according to the preceding claim, characterized in that said token is only erased after the database system (4) receives a confirmation from the querying user that the latter has received completely the objects in question.

17. Method according to one of the preceding claims, characterized in that the users additionally identify themselves to the database system (4) with a password.

18. Method according to the preceding claim, characterized in that the password is requested by the user administrator.

19. Method according to claim 17, characterized in that the password is requested by an application in the user's identification module (10).

20. Method according to one of the preceding claims, characterized in that the users additionally identify themselves to the database system (4) with an electronic key stored in their identification module (10).

21. Method according to one of the preceding claims, characterized in that said identification (102) is an IMSI.

22. Method according to one of the preceding claims, characterized in that said identification (102) is contained in an applet in the identification module (10).

23. Method according to the preceding claim, characterized in that said electronic key is supplied by a Trusted Third Party (TTP).

24. Method according to one of the preceding claims, characterized in that at least some messages between said user and the database system (4) are signed electronically.

25. Method according to the preceding claim, characterized in that the integrity of at least certain transmitted queries and/or objects are verified with said electronic key.

26. Method according to one of the preceding claims, characterized in that a user profile of at least certain users is stored in said database system (4).

27. Method according to the preceding claim, characterized in that said user profiles contain the users' preference parameters for use of the database system (4).

28. Method according to one of the claims 22 or 23, characterized in that said user profiles indicate as a bookmark the users' preferred queries.

29. Method according to one of the preceding claims, characterized in that the providing users identify themselves with their identification module (10) to reserve a memory area (440).

30. Method according to the preceding claim, characterized in that said reserved memory areas (440) can be rented to providing users.

31. Method according to one of the preceding claims, characterized in that the billed fee for the rented memory areas (440) depends on the amount of data and on the storage duration.

32. Method according to one of the preceding claims, characterized in that users reserve memory areas and store objects in these memory areas over the internet.

33. Method according to one of the preceding claims, characterized in that the WAP protocol is used for the transfer of data between the terminals (1) and the database system (4) and for the menu structure.

34. Method according to one of the preceding claims, characterized in that said database system (4) comprises a SQL-server and that at least certain said identification modules (10) comprise a SQL-client.

35. Method according to one of the preceding claims, characterized in that said database system (4) comprises a ODBC-database (Open Database Connectivity).

36. Method according to one of the preceding claims, characterized in that said database system (4) comprises a JDBC-database.

37. Method according to one of the preceding claims, characterized in that at least certain said objects are documents.

38. Method according to one of the preceding claims, characterized in that at least certain said objects are multimedia objects.

39. Method according to one of the preceding claims, characterized in that at least certain said objects are applications that can be run by the second users.

40. Method according to one of the preceding claims, characterized in that a fee is billed at the evaluation of at least certain queries, in that a message with at least one indication of this amount is prepared and sent to a billing centre (21) in said telecommunication network (2), whereas the billing centre (21) is also billing the users for use of the telecommunication network (2), and in that said billing centre (21) debits the user of that amount.

41. Method according to the preceding claim, characterized in that at least certain said amounts are automatically debited from a prepaid amount of money in the user's identification module.

42. Method according to one of the claims 40 or 41, characterized in that at least certain said amounts are billed to the second users with their bill for use of the telecommunication network.

43. Method according to one of the preceding claims, characterized in that said first users can allocate an expiration date for the stored objects after which these objects can no longer be consulted.

44. Method according to one of the preceding claims, characterized in that said first users can allocate a time window for the stored objects during which these objects can be consulted.

45. Method according to one of the preceding claims, characterized in that at least certain said first users can allocate a Quality of Service (QoS) to the stored objects.

46. Method according to one of the preceding claims, characterized in that at least certain said second users require a Quality of Service (QoS) in their user profile which indicates the quality with which these users can receive objects.

47. Method according to one of the claims 45 or 46, characterized in that said Quality of Service comprises a minimal bandwidth for the transmission of the objects.

48. Method according to one of the claims 45 or 46, characterized in that said Quality of Service comprises a maximal object transfer time.

49. Method according to one of the claims 45 or 46, characterized in that said Quality of Service comprises a preferred transmission channel.

50. Method according to one of the preceding claims, characterized in that said objects are stored in one directory hierarchy defined at least partially by the database administrator (43).

51. Method according to the preceding claim, characterized in that at least certain objects are search engines that can index and/or catalogue other objects in order to be able to search for them.

52. Method according to one of the preceding claims, characterized in that the user profile contains information about the terminal (10) used by the second user.

53. Method according to the preceding claim, characterized in that the JINI protocol is used to determine the terminal (1) used by the user.

54. Method according to one of the preceding claims, characterized in that at least certain sought objects are transferred via a Bluetooth interface (14, 63) to another unit (6).

## Revendications

1. Méthode permettant à un utilisateur nomade dans un réseau de télécommunications (2), dans lequel les utilisateurs sont identifiés par l'opérateur du réseau de télécommunications au moyen d'un module d'identification personnel (10), de mettre des objets à disposition d'autres utilisateurs du réseau de télécommunication, caractérisée par les étapes suivantes:
réservation par le premier utilisateur d'un espace de mémoire (440) d'un système de banque de données (4) accessible au travers dudit réseau de télécommunications, dans lequel au moins une pluralité d'utilisateurs peuvent insérer des objets,
insertion par le premier utilisateur d'objets dans ledit espace de mémoire (440),
attribution par le premier utilisateur de droits d'accès (441) auxdits objets,
transmission par un deuxième utilisateur d'une requête audit système de banque de données (4),
vérification des droits d'accès du deuxième utilisateur par le système de banque de données (4), l'identité (102) du deuxième utilisateur mémorisée dans son dit module d'identification personnel (10) étant utilisée pour l'identification dans le système de banque de données (4),
envoi d'une réponse du système de banque de données (4) au deuxième utilisateur lorsque ses droits d'accès le lui permettent.

2. Méthode selon la revendication 1, caractérisée en ce que ledit système de banque de données est réparti dans plusieurs serveurs (44) accessibles depuis ledit réseau de télécommunication (2).

3. Méthode selon l'une des revendications 1 ou 2, dans laquelle ledit réseau de télécommunication (2) est un réseau radio mobile (20).

4. Méthode selon la revendication précédente, dans laquelle ledit réseau de télécommunication (2) est un réseau GSM (20).

5. Méthode selon la revendication 3, dans laquelle ledit réseau de télécommunication (2) est un réseau UMTS (20).

6. Méthode selon l'une des revendications 1 ou 2, dans laquelle ledit réseau de télécommunication (2) est un réseau de communication numérique PLC.

7. Méthode selon l'une des revendications 1 ou 2, dans laquelle ledit réseau de télécommunication (2) est un réseau de téléphonie numérique, dans lequel les utilisateurs sont identifiés indépendamment du terminal employé (1) au moyen d'une carte à puce (10).

8. Méthode selon l'une des revendications précédentes, dans laquelle ledit système de banque de données (4) est relié par un lien TCP/IP audit réseau de télécommunication (2).

9. Méthode selon la revendication précédente, dans laquelle les requêtes des utilisateurs et les réponses du système de banque de données (4) sont converties dans une passerelle DIA (3) entre le réseau de télécommunication (2) et le lien TCP/IP.

10. Méthode selon l'une des revendications précédentes, dans laquelle lesdits premiers utilisateurs n'exigent aucun droit d'accès pour certains objets publics.

11. Méthode selon l'une des revendications précédentes, dans laquelle les utilisateurs n'accordent un droit d'accès pour certains objets qu'à un nombre limité d'utilisateurs prédéfinis (CUG, Closed User Group).

12. Méthode selon l'une des revendications précédentes, dans laquelle les utilisateurs n'accordent un droit d'accès pour certains objets qu'à eux-mêmes.

13. Méthode selon l'une des revendications précédentes, dans laquelle les utilisateurs n'accordent un droit d'accès pour certains objets qu'aux détenteurs d'un jeton donné.

14. Méthode selon la revendication précédente, caractérisée en ce que ledit jeton comprend une clé électronique.

15. Méthode selon l'une des revendications 13 ou 14, caractérisée en ce que ledit jeton est effacé après l'accès à l'objet concerné.

16. Méthode selon la revendication précédente, caractérisée en ce que ledit jeton n'est effacé que lorsque le système de banque de données (4) a reçu une confirmation de l'utilisateur requérant que celui-ci a entièrement reçu l'objet concerné.

17. Méthode selon l'une des revendications précédentes, caractérisée en ce que les utilisateurs s'identifient en outre au moyen d'un mot de passe envers le système de banque de données (4).

18. Méthode selon la revendication précédente, caractérisée en ce que ledit mot de passe est requis par l'administrateur de l'utilisateur.

19. Méthode selon la revendication précédente, caractérisée en ce que ledit mot de passe est requis par une application dans le module d'identification (10) de l'utilisateur.

20. Méthode selon l'une des revendications précédentes, caractérisée en ce que les utilisateurs s'identifient en outre envers le système de banque de données au moyen d'une clé électronique stockée dans leur module d'identification (10).

21. Méthode selon l'une des revendications précédentes, caractérisée en ce que ladite identification (102) est une identification de type IMSI.

22. Méthode selon l'une des revendications précédentes, caractérisée en ce que ladite identification (102) est contenue dans un Applet dans le module d'identification (10).

23. Méthode selon la revendication précédente, caractérisée en ce que ladite clé électronique est attribuée par un organisme tiers de certification (TTP, Trusted Third Party).

24. Méthode selon l'une des revendications précédentes, caractérisée en ce qu'au moins certains messages entre ledit utilisateur et le système de banque de données (4) sont signés de manière électronique.

25. Méthode selon la revendication précédente, caractérisée en ce que l'intégralité d'au moins certaines requêtes et/ou réponses est vérifiée au moyen de ladite clé électronique.

26. Méthode selon l'une des revendications précédentes, caractérisée en ce qu'un profil d'utilisateur d'au moins certains utilisateurs est stocké dans ledit système de banque de données (4).

27. Méthode selon la revendication précédente, caractérisée en ce que lesdits profils d'utilisateurs comprennent les paramètres de préférence des utilisateurs pour l'utilisation du système de banque de données (4).

28. Méthode selon l'une des revendications 22 ou 23, caractérisée en ce que lesdits profils d'utilisateur indiquent les requêtes favorites des utilisateurs sous forme de signets.

29. Méthode selon l'une des revendications précédentes, caractérisée en ce que les utilisateurs prestataires s'identifient au moyen de leur module d'identification (10) afin de réserver un espace mémoire (440).

30. Méthode selon la revendication précédente, caractérisée en ce que lesdits espaces mémoire (440) peuvent être loués aux utilisateurs prestataires.

31. Méthode selon l'une des revendications précédentes, caractérisée en ce que le prix facturé pour les espaces mémoire loués (440) dépend de la quantité de données insérée et de la durée de stockage.

32. Méthode selon l'une des revendications précédentes, caractérisée en ce que des utilisateurs réservent des espaces mémoire et insèrent des objets dans ces espaces mémoire au travers d'Internet.

33. Méthode selon l'une des revendications précédentes, caractérisée en ce que le protocole WAP est utilisé pour le transport de données entre les dispositifs terminaux (1) et le système de banque de données (4) et pour la structure de menu.

34. Méthode selon l'une des revendications précédentes, caractérisée en ce que ledit système de banque de données (4) comprend un serveur SQL, et qu'au moins certains modules d'identification (10) comprennent un client SQL.

35. Méthode selon l'une des revendications précédentes, caractérisée en ce que ledit système de banque de données (4) comprend une banque de données ODBC (Open Database Connectivity).

36. Méthode selon l'une des revendications précédentes, caractérisée en ce que ledit système de banque de données (4) comprend une banque de données JDBC.

37. Méthode selon l'une des revendications précédentes, caractérisée en ce qu'au moins certains desdits objets sont des documents.

38. Méthode selon l'une des revendications précédentes, caractérisée en ce qu'au moins certains desdits objets sont des documents multimédia.

39. Méthode selon l'une des revendications précédentes, caractérisée en ce qu'au moins certains desdits objets sont des applications pouvant être exécutées par les deuxièmes utilisateurs.

40. Méthode selon l'une des revendications précédentes, caractérisée en ce qu'un montant est facturé lors de l'évaluation d'au moins certaines requêtes, en ce qu'un message avec au moins une indication sur ce montant est préparée et envoyée à un centre de facturation (21) dans ledit réseau de télécommunication (2), le centre de facturation (21) facturant aussi le trafic dans ledit réseau de télécommunication (2), et en ce que le centre de facturation (21) débite ce montant à l'utilisateur.

41. Méthode selon la revendication précédente, caractérisée en ce qu'au moins certains desdits montants sont débités automatiquement d'un montant monétaire dans le module d'identification de l'utilisateur.

42. Méthode selon l'une des revendications 40 ou 41, caractérisée en ce qu'au moins certains desdits montants sont facturés aux deuxièmes utilisateurs avec la facture pour l'utilisation du réseau de télécommunication.

43. Méthode selon l'une des revendications précédentes, caractérisée en ce que lesdits premiers utilisateurs peuvent attribuer une date d'expiration aux objets insérés, après laquelle ces objets ne peuvent plus être consultés.

44. Méthode selon l'une des revendications précédentes, caractérisée en ce que lesdits premiers utilisateurs peuvent attribuer une fenêtre temporelle aux objets insérés, pendant laquelle ces objets peuvent être consultés.

45. Méthode selon l'une des revendications précédentes, caractérisée en ce qu'au moins certains dits premiers utilisateurs peuvent attribuer une qualité de service (QoS) aux objets insérés.

46. Méthode selon l'une des revendications précédentes, caractérisée en ce qu'au moins certains dits deuxièmes utilisateurs peuvent exiger dans leur profil d'utilisateur une qualité de service (QoS) avec laquelle ces utilisateurs peuvent recevoir des objets.

47. Méthode selon l'une des revendications 45 ou 46, caractérisée en ce que ladite qualité de service comprend une largeur de bande minimale pour la transmission des objets.

48. Méthode selon l'une des revendications 45 ou 46, caractérisée en ce que ladite qualité de service comprend une durée maximale de transmission des objets.

49. Méthode selon l'une des revendications 45 ou 46, caractérisée en ce que ladite qualité de service comprend un canal de transmission préféré.

50. Méthode selon l'une des revendications précédentes, caractérisée en ce que lesdits objets sont insérés dans une structure de répertoire au moins partiellement définie par un administrateur de la banque de données (43).

51. Méthode selon la revendication précédente, caractérisée en ce qu'au moins certains objets certains objets sont des moteurs de recherche qui indexent et/ou cataloguent d'autres objets pour permettre de les chercher.

52. Méthode selon l'une des revendications précédentes, caractérisée en ce que le profil d'utilisateur comprend des indications relatives au terminal (10) employé par le deuxième utilisateur.

53. Méthode selon la revendication précédente, caractérisée en ce que le protocole JINI est employé afin de déterminer le terminal employé par l'utilisateur.

54. Méthode selon l'une des revendications précédentes, caractérisée en ce qu'au moins certains objets peuvent être transmis par une interface Bluetooth (14, 63) à un autre appareil (6).
